# EUROPEAN PATENT APPLICATION

(11) **EP 4 681 583 A1**
(43) Date of publication of application: **21.01.2026**
(21) Application number: 24189149.8
(22) Date of filing: 17.07.2024
(51) Int. Cl.: A47J 31/44

(54) **COFFEE POWDER DISTRIBUTING AND TAMPING DEVICE**

(71) Applicant: Yang, Yuming, New Taipei City 22174 (TW)
(72) Inventor: Yang, Yuming, New Taipei City 22174 (TW)
(74) Representative: Viering, Jentschura & Partner mbB Patent- und Rechtsanwälte

(57) **Abstract**

A coffee powder distributing and tamping device including a device shell, a fixed bracket, a tamping telescopic assembly, and a powder distributing module is provided. The device shell has a storage space and an operating opening. The basket holder and the tamping telescopic assembly are fixedly connected to the device shell through the fixed bracket. The powder distributing module is linked to the tamping telescopic assembly and has a powder pressing cylinder and a powdering needle plate, which can be driven by a plurality of powder distributing telescopic assemblies. During the powder distribution stage, the powdering needle plate is driven by the powder distributing telescopic assembly and the powder distributing driving assembly to extend into a basket and stir the coffee powder. After the coffee powder is evenly distributed, the coffee powder can be flattened by a pressing plane formed by the powdering needles and the powder pressing cylinder.

## Description

### BACKGROUND OF THE INVENTION

### Field of the Invention

The present invention is related to a coffee powder distributing and tamping device, and more particularly is related to a coffee powder distributing and tamping device capable of uniformly distributing and firmly tamping coffee powder.

### Description of the Related Art

Generally speaking, the common espresso brewing method, at its simplest level, is to grind coffee beans into powder, and then inject hot water into the coffee powder to extract the substances in the coffee powder. When using hot water to extract the coffee powder, in order to have the coffee powder fully immersed in the hot water and speed up the extraction time, nine bar of pressure is usually used for extraction. Therefore, it is needed to make a uniform and solid powder cake by using the coffee powder into before extraction.

In order to make the powder cake by using the coffee powder, a powder spreader is usually used to stir the coffee powder in the basket evenly, and then a tamper is used to compact the coffee powder in the basket. Thereby, when being placed in the coffee machine, the uniform and solid powder cake can ensure that the hot water can stably extract the coffee powder stably with evenly distributed pressure to obtaining coffee with a consistent flavor.

Following the above, although the coffee powder can be organized into the powder cake through the powder spreader and the tamper, the powder spreader and tamper require the user to operate manually in general. When the user needs to prepare a large amount of espresso coffee, these manual operations often affect the efficiency of espresso production. In addition, although in the prior art, some manufacturers have produced automatic filling and compacting machines to assist the user to make the powder cakes by using the distributed coffee powder, it is still needed to use a powder spreader to stir the coffee powder evenly in advance. Therefore, the users still need to manually place the basket with the distributed coffee powder in the automatic filling and compacting machine frequently, which is quite inconvenient.

### BRIEF SUMMARY OF THE INVENTION

In view of the prior art, it is usually needs to distribute and tamp the coffee powder to form a powder cake first such that espresso can be brewed through the highpressure extraction, and a powder spreader and a tamper are required to accomplish the powder distributing and tamping actions, respectively. Even with an automatic filling and compacting machine that can automatically tamp the distributed coffee powder, there is still a powder distributing action which needs to be done manually by the user, and since the powder distributing and tamping operations are segmented, whether using a tamper or an automatic filling and compacting machine to complete the tamping operation, the brewing process would be more cumbersome and time-consuming because of the segmented operations. Accordingly, it is a main object of the present invention to provide a coffee powder distributing and tamping device, which is capable of distributing and tamping coffee powder continuously, so as to enhance efficiency of making powder cakes by using coffee powder.

In order to solve the problems of the prior art, some embodiments of the present invention provide a coffee powder distributing and tamping device, which comprises a device shell, a fixed bracket, a tamping telescopic assembly, and a powder distributing module.

The device shell has a storage space and an operating opening communicated with the storage space. The fixed bracket is disposed in the storage space and fixedly connected to the device shell. The tamping telescopic assembly is fixedly disposed on the fixed bracket.

The powder distributing module comprises a powder distributing module shell, a powder pressing cylinder, a plurality of powder distributing telescopic assemblies, a powder distributing driving assembly, and a powdering needle plate.

The powder distributing module shell is linked to the tamping telescopic assembly and driven by the tamping telescopic assembly so as to be movably disposed in the device shall along a first direction. The powder pressing cylinder is rotatably disposed on the powder distributing module shell and protruded from the powder cylinder module shell. The plurality of powder distributing telescopic assemblies is disposed in the powder distributing module shall and fixedly connected to the powder distributing module shell, respectively. The powder distributing driving assembly is fixedly connected to the powder distributing telescopic assemblies and driven by the powder distributing telescopic assemblies so as to be movably disposed in the powder distributing module shell along the first direction. The powdering needle plate is transmittably linked to the powder distributing driving assembly for being driven by the powder distributing driving assembly so as to be rotatably disposed in the powder pressing cylinder. The powdering needle plate has a plurality of powdering needles, and the powdering needles penetrate the powder pressing cylinder, respectively.

Wherein, during a powder distributing stage, a basket is fixed in the storage space and aligned with the powder pressing cylinder, and the powdering needles of the powdering needle plate, which are driven by the powder distributing telescopic assemblies and the powder distributing driving assembly, extend into the basket and rotationally stir coffee powder in the basket, and retract back to the powder pressing cylinder after the coffee powder is stirred and uniformly distributed, so as to form a pressing plane at a bottom surface of the powder pressing cylinder; and during a powder tamping stage after the powder distributing stage, the powder distributing module, which is driven by the tamping telescopic assembly, moves along the first direction to flatten the coffee powder by using the pressing plane.

In one preferred embodiment of the present invention, the powder distributing module shell further comprises a shell stage body and a partition plate, the shell stage body has a mechanism space, the partition plate is disposed in the mechanism space, and the powder pressing cylinder is rotatably disposed between the shell stage body and the partition plate.

Preferably, the powder distributing module shell further comprises a first bearing and a second bearing, the first bearing and the second bearing are disposed between the shell stage body and the partition plate, and the powder pressing cylinder is disposed between the first bearing and the second bearing to have the powder pressing cylinder rotatably disposed on the powder distributing module shall.

In one preferred embodiment of the present invention, the powder distributing module shell further comprises a shell stage body and a partition plate, the shell stage body has a mechanism space, the partition plate is disposed in the mechanism space, and the powder pressing cylinder is rotatably disposed between the shell stage body and the partition plate.

In one preferred embodiment of the present invention, the coffee powder distributing and tamping device further comprises a basket holder and an elastic clamping assembly, the basket holder is fixedly disposed on the fixed bracket and exposed through the operating opening, the elastic clamping assembly is along the first direction retractably connected to the powder distributing module shell and is disposed between the backet holder and the powder distributing module shell for clamping a bracket handler extending between the basket holder and the powder distributing module shell to have the basket supported by the basket handler fixed in the storage space and aligned with the powder pressing cylinder, wherein the powder pressing cylinder further penetrates the elastic clamping assembly.

Some embodiments of the present invention provide another coffee powder distributing and tamping device, which comprises a device shell, a fixed bracket, a tamping telescopic assembly, and a powder distributing module.

The device shell has a storage space and an operating opening communicated with the storage space. The fixed bracket is disposed in the storage space and fixedly connected to the device shell. The tamping telescopic assembly is fixedly disposed on the fixed bracket.

The powder distributing module comprises a powder distributing module shell, a powder pressing cylinder, a powder distributing telescopic assembly, a powder distributing driving assembly, and a powdering needle plate.

The powder distributing module shell is linked to the tamping telescopic assembly and driven by the tamping telescopic assembly so as to be movably disposed in the device shall along a first direction. The powder pressing cylinder is rotatably disposed on the powder distributing module shell and protruded from the powder cylinder module shell. The powder distributing telescopic assembly is disposed in the powder distributing module shall and fixedly connected to the powder distributing module shell, respectively. The powder distributing driving assembly is fixedly connected to the powder distributing telescopic assembly and driven by the powder distributing telescopic assembly so as to be movably disposed in the powder distributing module shell along the first direction. The powdering needle plate is transmittably linked to the powder distributing driving assembly for being driven by the powder distributing driving assembly so as to be rotatably disposed in the powder pressing cylinder. The powdering needle plate has a plurality of powdering needles, and the powdering needles penetrate the powder pressing cylinder, respectively.

Wherein, during a powder distributing stage, a basket is fixed in the storage space and aligned with the powder pressing cylinder, and the powdering needles of the powdering needle plate, which are driven by the powder distributing telescopic assembly and the powder distributing driving assembly, extend into the basket and rotationally stir coffee powder in the basket, and retract back to the powder pressing cylinder after the coffee powder is stirred and uniformly distributed, so as to form a pressing plane at a bottom surface of the powder pressing cylinder; and during a powder tamping stage after the powder distributing stage, the powder distributing module, which is driven by the tamping telescopic assembly, moves along the first direction to flatten the coffee powder by using the pressing plane.

In one preferred embodiment of the present invention, the powder distributing module shell further comprises a shell stage body and a partition plate, the shell stage body has a mechanism space, the partition plate is disposed in the mechanism space, and the powder pressing cylinder is rotatably disposed between the shell stage body and the partition plate. Wherein, the powder distributing module shell further comprises a first bearing and a second bearing, the first bearing and the second bearing are disposed between the shell stage body and the partition plate, and the powder pressing cylinder is disposed between the first bearing and the second bearing to have the powder pressing cylinder rotatably disposed on the powder distributing module shall.

In addition, the powder distributing module shell further comprises a first gear, the first gear is disposed between the first bearing and the second bearing, and the powder pressing cylinder is linked to the first gear, the powder distributing driving assembly further comprises a second gear, the second gear engages with the first gear so as to have the powder distributing driving assembly transmittably linked to the powder pressing cylinder.

Preferably, the first gear rotates centered at a first axis, the second gear rotates centered at a second axis, the first axis and the second axis are parallel to the first direction, and both the first gear and the second gear are spur gears. Still preferably, the first gear rotates centered at a first axis, the second gear rotates centered at a second axis, the first axis is parallel to the first direction, the second axis is perpendicular to the first direction, and both the first gear and the second gear are bevel gears.

In one preferred embodiment of the present invention, the powder distributing module shell further comprises a first wheel, the first wheel is disposed between the first bearing and the second bearing, and the powder pressing cylinder is linked to the first wheel, the powder distributing driving assembly further comprises a second wheel, the second wheel is transmittably linked to the first wheel to have the powder distributing driving assembly transmittably linked to the powder pressing cylinder.

In one preferred embodiment of the present invention, the coffee powder distributing and tamping device further comprises a basket holder and an elastic clamping assembly, the basket holder is fixedly disposed on the fixed bracket and exposed through the operating opening, the elastic clamping assembly is along the first direction retractably connected to the powder distributing module shell and is disposed between the backet holder and the powder distributing module shell for clamping a bracket handler extended between the basket holder and the powder distributing module shell to have the basket supported by the basket handler fixed in the storage space and aligned with the powder pressing cylinder, wherein the powder pressing cylinder further penetrates the elastic clamping assembly.

From the above description, the present invention mainly uses the powder distributing telescopic assembly and the powder distributing driving assembly to drive the powdering needle plate to distribute the coffee powder in the basket. Because the powder distributing telescopic assembly and the powder distributing driving assembly are disposed in the powder distributing module shell, and the powdering needles of the powdering needle plate penetrate the powder pressing cylinder, when the powder distributing stage completes and the powdering needles retract back to the bottom surface of the powder pressing cylinder to form the pressing plane, the tamping telescopic assembly can be used to drive the whole powder distributing module shell moving along the first direction to flatten and tamp the distributed coffee powder by using the pressing plane. Thereby, the coffee powder distributing and tamping device provided in the present invention can distribute and tamp the coffee powder continuously, so as to enhance the efficiency of making powder cakes.

Further features of the present invention would be described in the following embodiments and figure.

### BRIEF DESCRIPTION OF THE DRAWINGS

Fig. 1 is a schematic perspective view of a coffee powder distributing and tamping device provided in accordance with a first preferred embodiment of the present invention;
Fig. 2 is a schematic exploded perspective view of the coffee powder distributing and tamping device provided in accordance with a first preferred embodiment of the present invention;
Fig. 3 is a schematic exploded perspective view of the tamping telescopic assembly and the fixed bracket of the coffee powder distributing and tamping device provided in accordance with a first preferred embodiment of the present invention;
Fig. 4 is a schematic exploded perspective view of the tamping telescopic assembly and the fixed bracket of the coffee powder distributing and tamping device provided in accordance with a first preferred embodiment of the present invention from another viewing angle;
Fig. 5 is a schematic cross-sectional view along A-A cross-section of Fig. 2;
Fig. 6 is a schematic cross-sectional view along B-B cross-section of Fig. 2;
Fig. 7 is a schematic perspective view in practical application showing a basket handler inserted between the basket holder and the elastic clamping assembly of the coffee powder distributing and tamping device provided in accordance with a first preferred embodiment of the present invention;
Fig. 8 is a schematic cross-sectional view along C-C cross-section of Fig. 7;
Fig. 9 is a schematic cross-sectional view in practical application showing the powder distributing module drives the powder distributing driving assembly and the powdering needle plate to move along the first direction by using the powder distributing telescopic assembly, and drives the powdering needle plate to rotate to have the powdering needles stirring the coffee powder by using the powder distributing driving assembly in accordance with a first preferred embodiment of the present invention;
Fig. 10 is a schematic cross-sectional view in practical application showing the pressing plane, which is driven by the tamping telescopic assembly, tamps the coffee powder after the powdering needles stirred the coffee powder and retract back to the powder pressing cylinder to form the pressing plate in accordance with a first preferred embodiment of the present invention;
Fig. 11 is a schematic perspective view of a powder distributing module provided in accordance with a second preferred embodiment of the present invention;
Fig. 12 is a schematic exploded perspective view of a powder distributing module provided in accordance with a second preferred embodiment of the present invention;
Fig. 13 is a schematic perspective view of a powder distributing module provided in accordance with a third preferred embodiment of the present invention;
Fig. 14 is a schematic planar view of a powder distributing module provided in accordance with a third preferred embodiment of the present invention;
Fig. 15 is a schematic cross-sectional view along D-D cross-section of a powder distributing module provided in accordance with a third preferred embodiment of the present invention;
Fig. 16 is a schematic perspective view of a powder distributing module provided in accordance with a fourth preferred embodiment of the present invention;
Fig. 17 is a schematic planar view of a powder distributing module provided in accordance with a fourth preferred embodiment of the present invention; and
Fig. 18 is a schematic cross-sectional view along E-E cross-section of a powder distributing module provided in accordance with a fourth preferred embodiment of the present invention.

### DETAILED DESCRIPTION OF THE EMBODIMENTS

Specific implementations of this disclosure are further described in detail below with reference to the accompanying drawings. According to the following descriptions and claims, the advantages and features of this disclosure are clearer. It should be noted that the drawings are drawn by using an extremely simplified form and imprecise proportion, which are only used for conveniently and clearly assisting in explaining the objective of the embodiments of this disclosure.

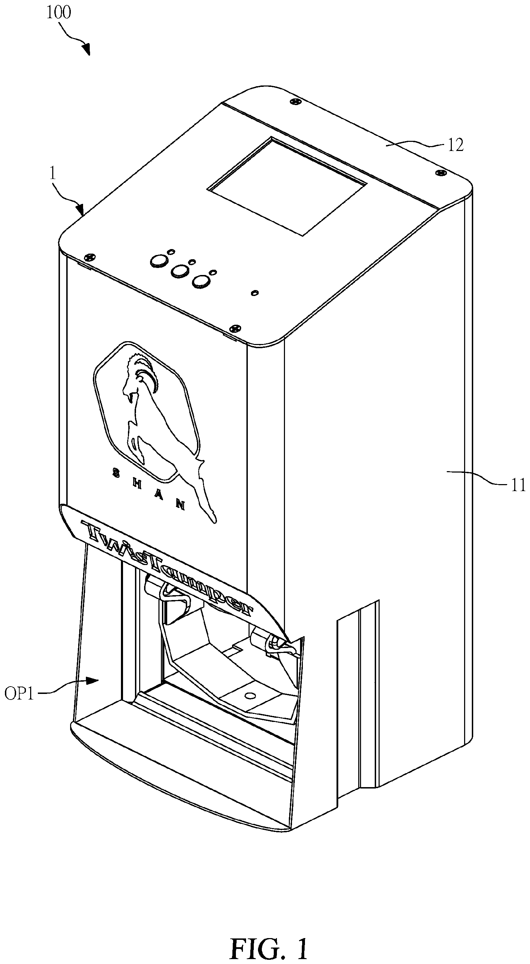

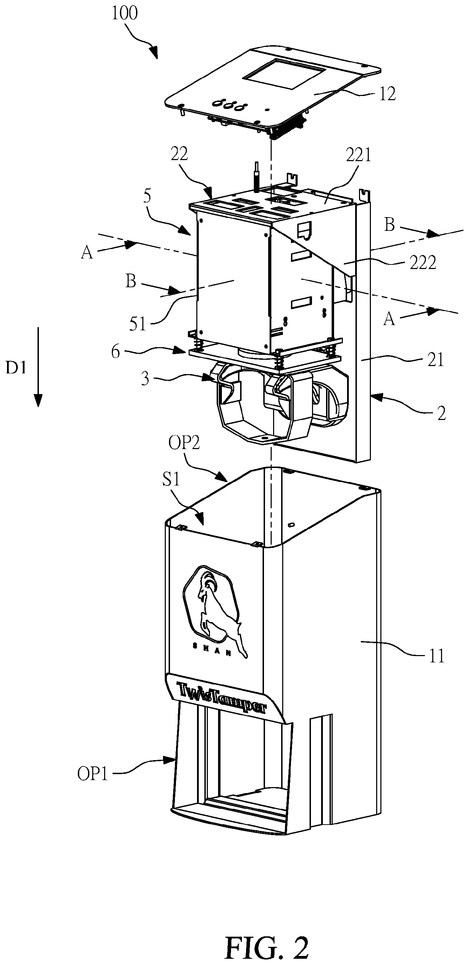

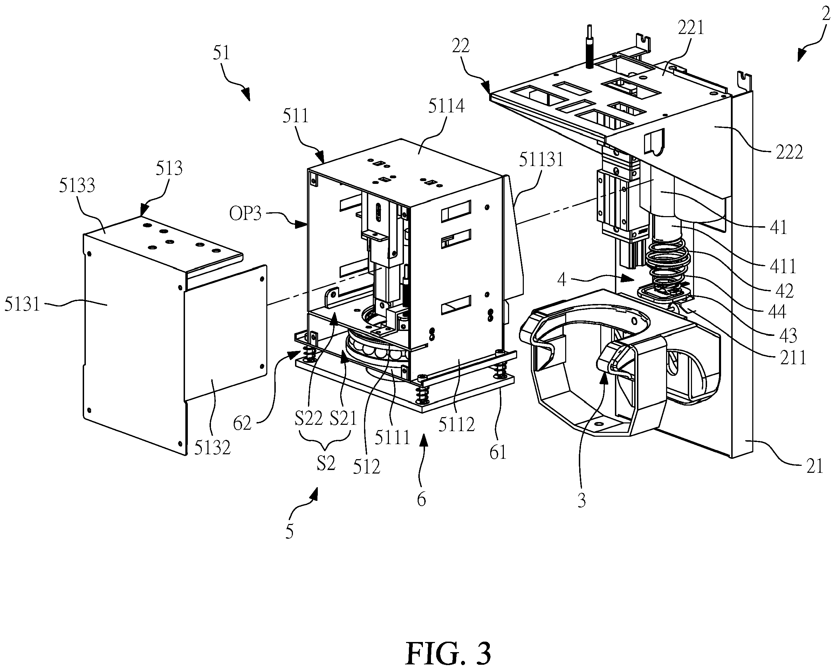

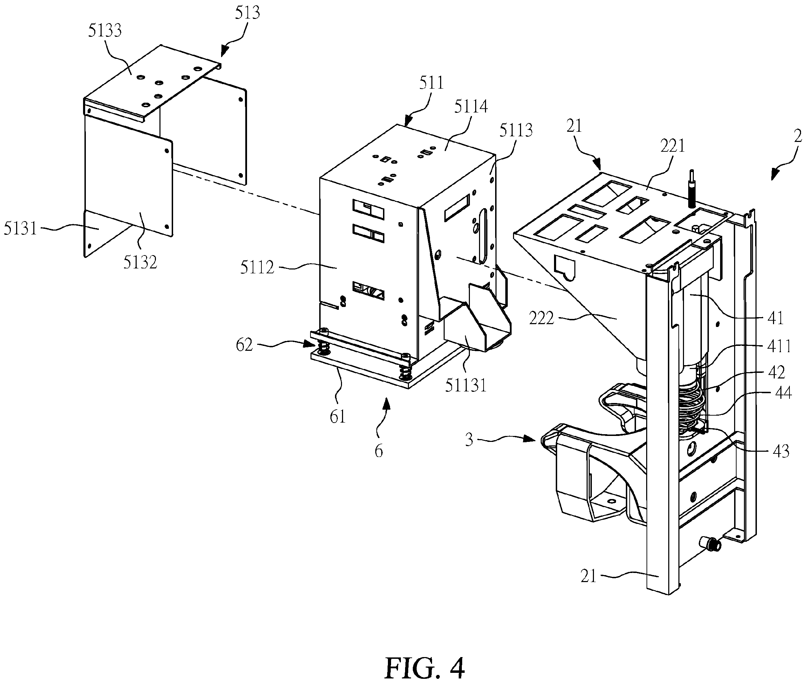

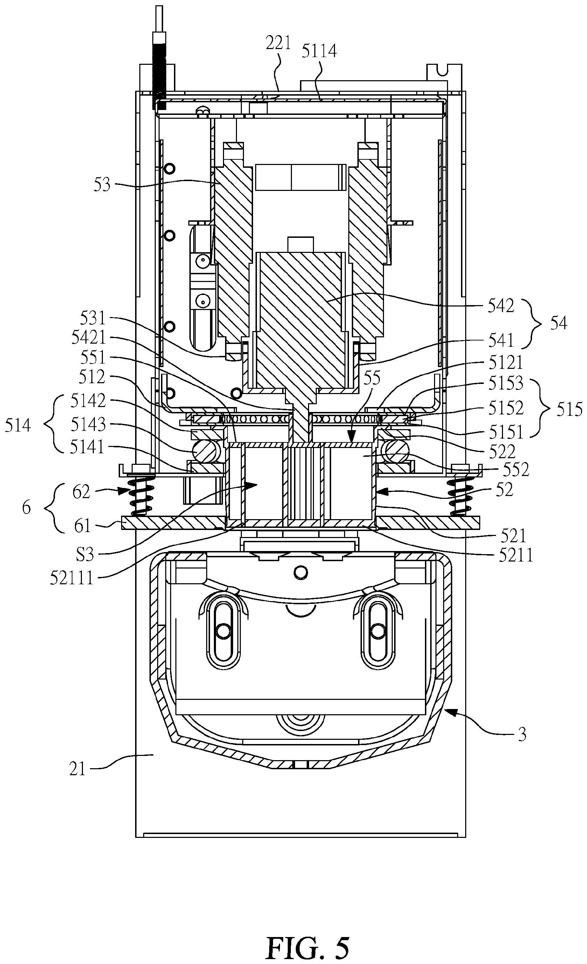

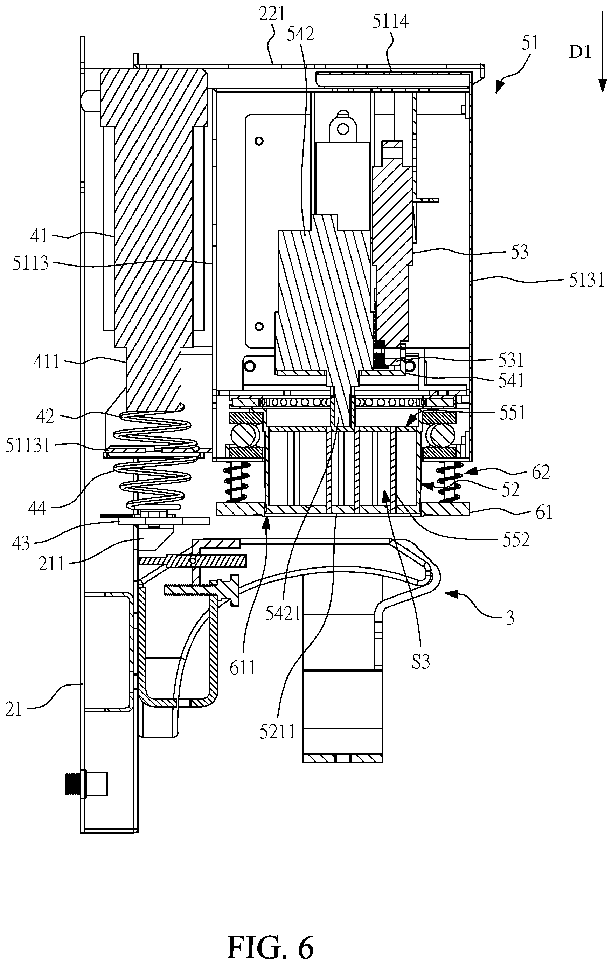

Please refer to Figs. 1 to 6, wherein Fig. 1 is a schematic perspective view of a coffee powder distributing and tamping device provided in accordance with a first preferred embodiment of the present invention, Fig. 2 is a schematic exploded perspective view of the coffee powder distributing and tamping device provided in accordance with a first preferred embodiment of the present invention, Fig. 3 is a schematic exploded perspective view of the tamping telescopic assembly and the fixed bracket of the coffee powder distributing and tamping device provided in accordance with a first preferred embodiment of the present invention, Fig. 4 is a schematic exploded perspective view of the tamping telescopic assembly and the fixed bracket of the coffee powder distributing and tamping device provided in accordance with a first preferred embodiment of the present invention from another viewing angle, Fig. 5 is a schematic cross-sectional view along A-A cross-section of Fig. 2, and Fig. 6 is a schematic cross-sectional view along B-B cross-section of Fig. 2.

As shown in Fig. 1 to Fig. 6, a coffee powder distributing and tamping device 100, which comprises a device shell 1, a fixed bracket 2, a basket holder 3, a tamping telescope assembly 4, a powder distributing module 5, and an elastic clamping assembly 6, is provided.

The device shell 1 comprises a shell body 11 and an upper cover 12, the shell body 11 has a storage space S1 and an operating opening OP1 and an assembling opening OP2 are formed thereon, and the operating opening OP1 and the assembling opening OP2 are communicated with the storage space S1 respectively. Wherein, the operating opening OP1 is disposed at a side of a bottom portion of the shell body 11, and the assembling opening OP2 is disposed at a top of the shell body 11. The upper cover 12 is used for connecting to the top of the shell body 12 to cover the assembling opening OP2. In the present embodiment, a control module (not labelled) is disposed at an inner side of the upper cover 12, the operating buttons (not labelled) and the display (not labelled) of the control module are exposed through the upper cover 12 for users to operate.

The fixed bracket 2 comprises a bracket body 21 and a stopper 22. The bracket body 21 is disposed in the storage space S1 and fixedly connected to the device shell 11 and has an inner supporting plate 211. The stopper 22 is disposed at a top of the bracket body 21 and comprises a top plate 221 and two side plates 222 (only one of them is labelled), the top plate 221 is fixedly connected to the top edge of the bracket body 21, and the two side plates 222 are fixedly connected to two sides of the top plate 221 and side edges of the bracket body 21. In the present embodiment, the two side plates 222 are triangular plates for supporting the top plate 221 to keep an angle between the top plate 221 and the bracket body 21 around 90 degrees.

The basket holder 3 is fixedly disposed on the bracket body 21 and exposed through the operating opening OP1. The basket holder 3 is well known in the conventional automatic filling and compacting machine, and thus is not repeated here.

The tamping telescopic assembly 4 is fixedly disposed on the bracket body 21 and comprises a first driver 41, a first spring 42, a pressure sensor 43, and a second spring 44. The first driver 41 is fixedly disposed on the bracket body 21 and has a first telescopic bar 411 which is extendable and retractable along a first direction D1. Concretely speaking, the first driver 41 can be an electric telescopic pole for example, and the first telescopic bar 411 can be the pushing pole of the electric telescopic pole. The first spring 42 is linked to the first telescopic bar 411. The pressure sensor 43 is disposed on the inner support plate 221 and faces the first driver 41. The second spring 44 is linked to the pressure sensor 43 and disposed between the pressure sensor 43 and the first spring 42.

The powder distributing module 5 comprises a powder distributing module shell 51, a powder pressing cylinder 52, a plurality of powder distributing telescopic assemblies 53 (only one of them is labelled), a powder distributing driving assembly 54, and a powdering needle plate 55.

The powder distributing module shell 51 comprises a shell stage body 511, a partition plate 512, a front guard plate 513, a first bearing 514, and a second bearing 515. The shell stage body 511 has a base plate 5111, two side plates 5112 (only one of them is labelled), a back plate 5113, and a top plate 5114. The two side plates 5112 are fixedly connected to two sides of the base plate 5111. The back plate 5113 is located between the two side plates 5112 and fixedly connected to the base plate 5111. Two sides of the back plate 5113 are fixedly connected to the two side plates 5112, respectively. The top plate 5114 is fixedly connected to the two side plates 5112 and the back plate 5113 so as to have the base plate 5111, the two side plates 5112, the back plate 5113, and the top plate 5114 surrounding and forming a mechanism space S2 and a front opening OP3 communicated with the mechanism space S2. Wherein the back plate 5113 also has a linking structure 51131, the linking structure 51131 is formed by having the outer surface of the back plate 5113 protruded outward, and is used for being inserted in the space between the first spring 42 and the second spring 44 so as to link the first driver 41 through the first spring 42. In addition, in practical application, some guiding elements such as a guiding rod may be disposed between the top plate 5114 and the top plate 221 to have the powder distributing module shell 51 reciprocate along the first direction D1.

The partition plate 512 is disposed in the shell stage body 511 and fixedly connected to the side plates 5112 to have the mechanism space S2 divided into a lower space S21 and an upper space S22. Wherein, the partition plate 512 also has a through hole 5121 to have the lower space S21 communicated with the upper space S22.

The front guard plate 513 comprises a guard plate body 5131, two side extending sheets 5132 (only one of them is labelled), and a top extending sheet 5133. The guard plate body 5131 is locked to the front opening OP3 of the shell stage body 511. The two side extending sheets 5132 are fixedly connected to two sides of the guard plate body 5131 respectively, and the top extending sheet 5133 is fixedly connected to a top of the guard plate body 5131, wherein the two side extending sheets 5132 are used for fixedly connected to the two side plates 5112, and the top extending sheet 5133 is used for fixedly connected to the top plate 5114 so as to strengthen the whole powder distributing module shell 51. In other embodiments, it is implementable to use the front guard plate 513 with only the guard plate body 5131 and the two side extending sheets 5132 and the top extending sheet 5133 are skipped.

The first bearing 514 comprises a first bearing lower part 5141, a first bearing upper part 5142, and a plurality of first bearing rolling elements 5143 (only one is labelled). The first bearing lower part 5141 is fixed on the base plate 5111, the first bearing upper part 5142 corresponds to the first bearing lower part 5141 and is disposed on the first bearing lower part 5141. The plurality of first bearing rolling elements 5143 are disposed between the first bearing lower part 5141 and the first bearing upper part 5142 so as to allow the first bearing lower part 5141 and the first bearing upper part 5142 rotate relatively.

The second bearing 515 comprises a second bearing lower part 5151, a second bearing upper part 5152, and a plurality of second bearing rolling elements 5153 (only one is labelled). The second bearing lower part 5151 is spaced apart from the first bearing upper part 5142, the second bearing upper part 5152 is disposed on the second bearing lower part 5151. The plurality of second bearing rolling elements 5153 are disposed between the second bearing lower part 5151 and the second bearing upper part 5152 so as to allow the second bearing lower part 5151 and the second bearing upper part 5152 rotate relatively.

The powder pressing cylinder 52 comprises a cylinder body 521 and a top ring 522. The cylinder body 521 protrudes outward from inside the shell stage body 511 and extends toward the basket holder 3 and has a cylinder space S3. The cylinder body 521 also has a cylinder body base 5211, and the cylinder body base 5211 has a plurality of holes 52111 (only one is labelled). Wherein, the top ring 522 is disposed between the first bearing upper part 5142 and the second bearing lower part 5151. Thereby, the powder pressing cylinder 52 can rotate relative to the powder distributing module shell 51.

The plurality of powder distributing telescopic assemblies 53 is disposed in the powder distributing module shall and fixedly connected to the inner side of the shell stage body 511 respectively. Each powder distributing driving assembly 53 has a second telescopic bar 531 which is extendable and retractable along the first direction D1. In the present embodiment, an amount of the powder distributing telescopic assemblies is three, but is not limited thereto, and the amount can be two.

The powder distributing driving assembly 54 comprises a motor frame 541 and a motor body 542. The motor frame is fixedly connected to the second telescopic bars 531 of the plurality of powder distributing telescopic assemblies 53. The motor body 542 is fixed in the motor frame 541 and has a motor output shaft 5421. Wherein, because the motor body 542 is fixedly connected to the second telescopic bar 531 of the powder distributing telescopic assembly 53, the whole powder distributing driving assembly 54 would be movably disposed in the powder distributing module shell 51 along the first direction D1.

The powdering needle plate 55 comprises a needle plate body 551 and a plurality of powdering needles 552 (only one is labelled). The needle plate body 551 is fixedly connected to the motor output shaft 5421 and movably penetrating the cylinder space S3 of the cylinder body 521 along the first direction D1. The plurality of powdering needles 552 are extended from the needle plate body 551 along the first direction D1 toward the cylinder body base 5211 respectively and correspondingly penetrating the plurality of holes 52111, respectively. In the present embodiment, when the second telescopic bar 531 of the powder distributing telescopic assembly 53 retracts to the extreme, the plurality of powdering needles 552 retract back to the cylinder body base 5211 respectively and align with the bottom surface of the cylinder body base 5211 to form a pressing plane (not labelled).

The elastic clamping assembly 6 comprises a clamping plate 61 and four elastic elements 62 (only one is labelled). The clamping plate 61 has a clamping plate opening 611, and the powder pressing cylinder 52 penetrates the clamping plate opening 611. Wherein, the elastic element 62 in practice is composed of a spring and a limit screw. The limit screw penetrates the base plate 5111 and is screw-fixed to the clamping plate 61. The spring is disposed between the base plate 5111 and the clamping plate 61 so as to have the clamping plate 61 elastically and retractably assembled to the powder distributing module shell 51 along the first direction D1.

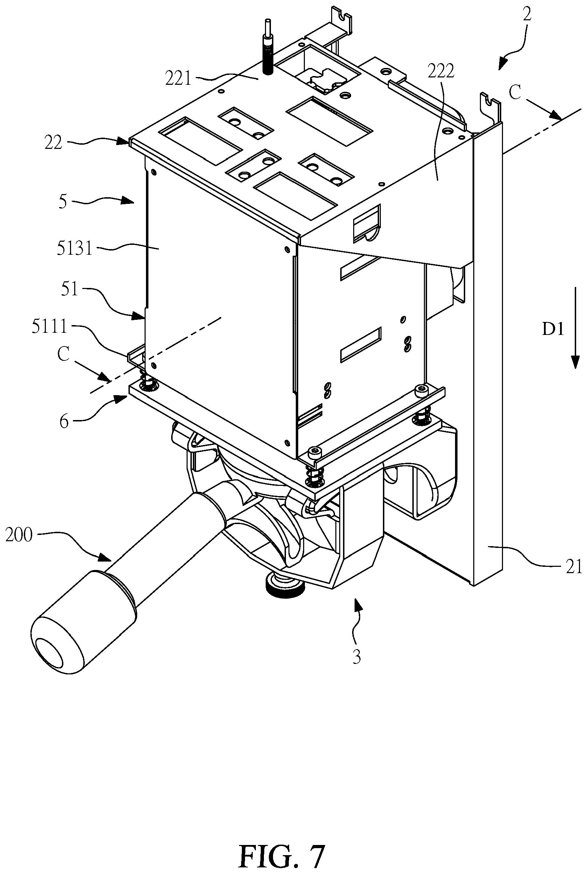

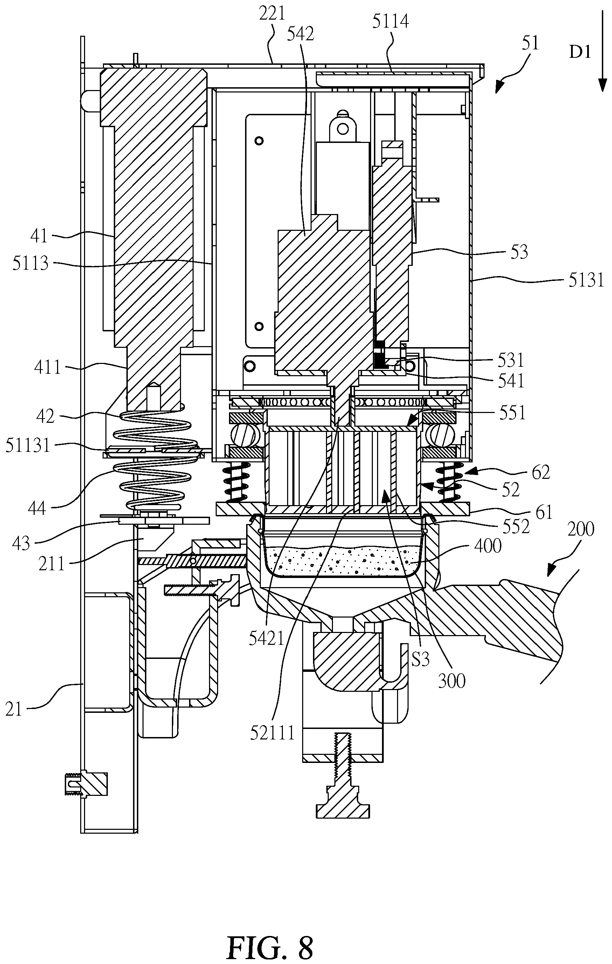

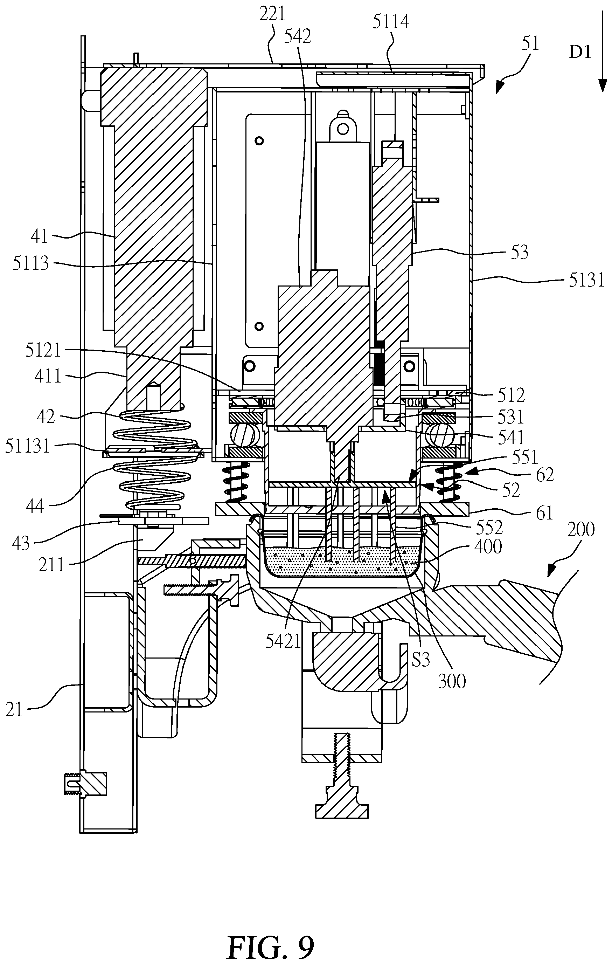

Please keep referring to Fig. 7 to Fig. 9, wherein Fig. 7 is a schematic perspective view in practical application showing a basket handler inserted between the basket holder and the elastic clamping assembly of the coffee powder distributing and tamping device provided in accordance with a first preferred embodiment of the present invention, Fig. 8 is a schematic cross-sectional view along C-C cross-section of Fig. 7, and Fig. 9 is a schematic cross-sectional view in practical application showing the powder distributing module drives the powder distributing driving assembly and the powder needle plate to move along the first direction by using the powder distributing telescopic assembly, and drives the powdering needle plate to rotate to have the powdering needles stirring the coffee powder by using the powder distributing driving assembly in accordance with a first preferred embodiment of the present invention.

As shown in Fig. 1 to Fig. 9, during a powder distributing stage, by using a basket handler 200 to support a basket 300 and place the basket 300 between the basket holder 3 and the elastic clamping assembly 6, the basket 300 can be aligned with the powder pressing cylinder 52. Wherein, because four elastic elements are used to elastically press against the clamping plate 61, the clamping plate 61 may lock the basket handler 200 together with the basket holder 3. In the present embodiment, because the basket handler 200 is well known in the art, the detail is not repeated here.

As mentioned, after the basket 300 is placed right under the powder pressing cylinder 52 and aligned with the powder pressing cylinder 52, the powder distributing module 5 drives the second telescopic bar 531 to extend along the first direction D1 through the powder distributing telescopic assembly 53 to have the powder distributing driving assembly 54 linked to the second telescopic bar 531 moving along the first direction D1 so as to drive the powdering needles 552 penetrating the holes 52111 of the powder cylinder 52 outward and extending into the coffee powder 400 loaded in the basket 300. The powdering needle plate 55 is further driven by the motor output shaft 5421 to rotate such that the powdering needles 552 may stir the coffee powder 400 to have the coffee powder 400 evenly distributed. Wherein, because the powder pressing cylinder 52 is disposed between the first bearing 514 and the second bearing 515 and is capable to rotate relative to the shell stage body 511, even under the condition that the powdering needle plate 55 is driven to rotate when the powdering needles 552 of the powdering needle plate 55 penetrate the powder pressing cylinder 52, the powder pressing cylinder 52 would rotate together with the powdering needle plate 55 because the powder pressing cylinder 52 is rotatable with respective to the shell stage body 511.

In addition, after the coffee powder 400 is stirred by the powdering needles 552 and evenly distributed, the powder distributing telescopic assembly 53 drives the second telescopic bars 531 retract, so as to have the powdering needles 552 retract back to the cylinder body bottom 5211 to have the bottom surface of the cylinder body bottom 5211 and the powdering needles 552 forming a pressing plane.

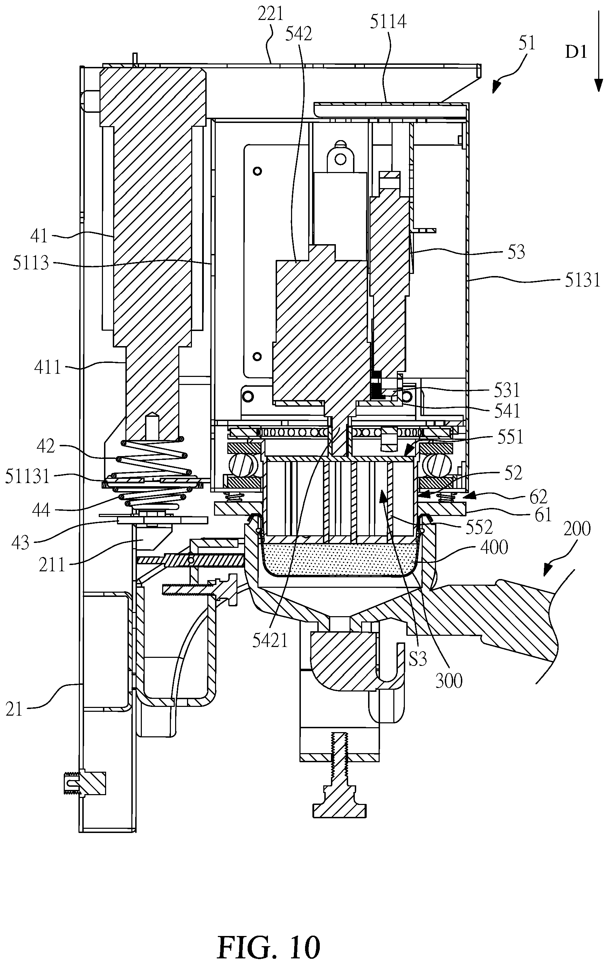

Please keep referring to Fig. 10, wherein Fig. 10 is a schematic cross-sectional view in practical application showing the pressing plane, which is driven by the tamping telescopic assembly, tamps the coffee powder after the powdering needles stirred the coffee powder and retract back to the powder pressing cylinder to form the pressing plate in accordance with a first preferred embodiment of the present invention. As shown in Fig. 1 to Fig. 10, in a powder tamping stage after the powder distributing stage, by using the tamping telescopic assembly 4 to drive the first telescopic bar 411 to extend, the whole powder distributing module 5 can be driven to move along the first direction D1 to have the powder pressing cylinder 52 and the powdering needles extending into the basket 300 such that the coffee powder 400 in the basket 300 would be tamped and flatten by the pressing plane so as to convert the coffee powder 400 into an evenly distributed and solid powder cake.

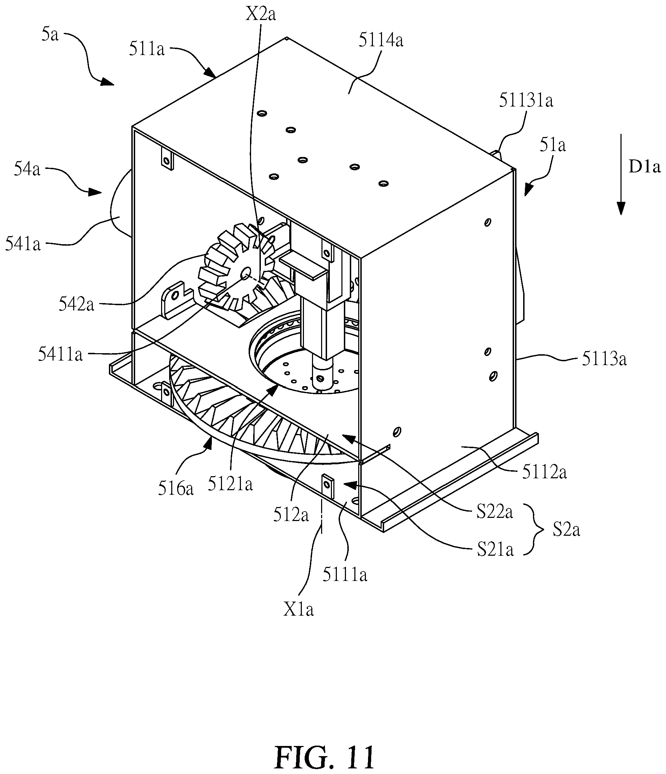

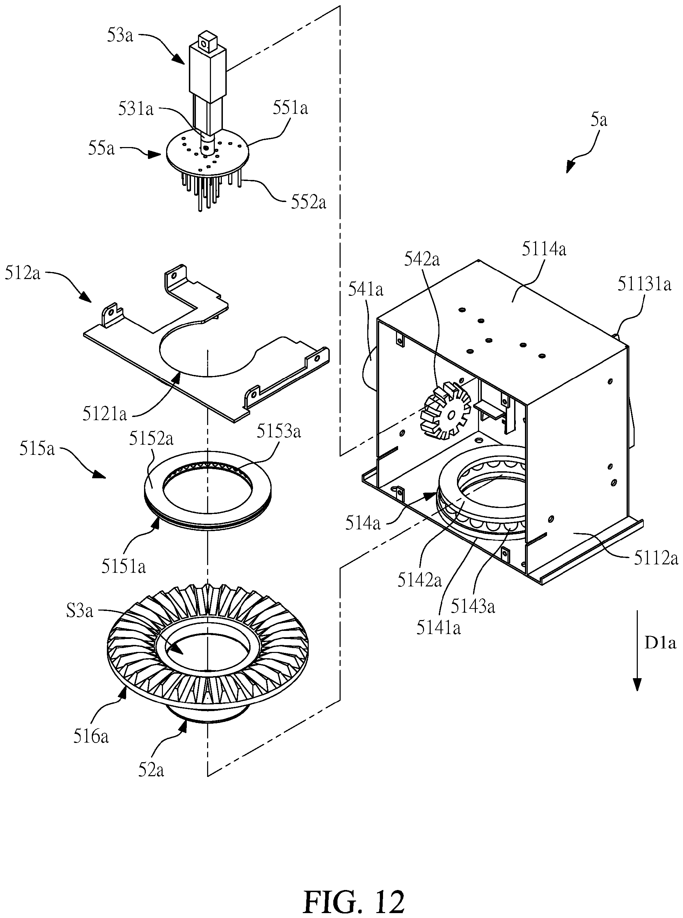

Please keep referring to Fig. 11 and Fig. 12, wherein Fig. 11 is a schematic perspective view of a powder distributing module provided in accordance with a second preferred embodiment of the present invention, and Fig. 12 is a schematic exploded perspective view of a powder distributing module provided in accordance with a second preferred embodiment of the present invention.

As shown in Fig. 1 to Fig. 12, the present embodiment adapts a powder distributing module 5a to replace the afore-mentioned powder distributing module 5. The powder distributing module 5a comprises a powder distributing module shell 51a, a powder pressing cylinder 52a, a powder distributing telescopic assembly 53a, powder distributing driving assembly 54a, and a powdering needle plate 55a.

The powder distributing module shell 51a comprises a shell stage body 511a, a partition plate 512a, a front guard plate (not shown, corresponding to the afore-mentioned front guard plate 513, and thus is skipped), a first bearing 514a, a second bearing 515a, and a first gear 516a. The shell stage body 511a has a base plate 5111a, two side plates 5112a (only one of them is labelled), a back plate 5113a, and a top plate 5114a. Because the shell stage body 511a and the partition plate 512a are similar to the shell stage body 511 and the partition plate 512 of the afore-mentioned first preferred embodiment respectively, and thus is not repeated here. In addition, with the linking structure 51131a of the back plate 5113a linked to the first driver 41, the powder distributing module shell 51a can be assembled in the afore-mentioned fixed bracket 2.

The first bearing 514a comprises a first bearing lower part 5141a, a first bearing upper part 5142a, and a plurality of first bearing rolling elements 5143a (only one is labelled). The first bearing lower part 5141a is fixed on the base plate 5111a, the first bearing upper part 5142a is correspondingly disposed on the first bearing lower part 5141a. The plurality of first bearing rolling elements 5143a are disposed between the first bearing lower part 5141a and the first bearing upper part 5142a so as to allow the first bearing lower part 5141a and the first bearing upper part 5142a rotate relatively.

The second bearing 515a comprises a second bearing lower part 5151a, a second bearing upper part 5152a, and a plurality of second bearing rolling elements 5153a (only one is labelled). The second bearing lower part 5151a is spaced apart from the first bearing upper part 5142a, the second bearing upper part 5152a is disposed on the second bearing lower part 5151a. The plurality of second bearing rolling elements 5153a are disposed between the second bearing lower part 5151a and the second bearing upper part 5152a so as to allow the second bearing lower part 5151a and the second bearing upper part 5152a rotate relatively.

The first gear 516a is disposed between the first bearing 514a and the second bearing 515a, and the first gear 516a is a bevel gear, having a flattened portion of a top inner edge thereof abut the first bearing upper part 5142a, and a bottom abut the second bearing lower part 5151a so as to allow the first gear 516a to rotate relative to the shell stage body 511a.

The powder pressing cylinder 52a is similar to the afore-mentioned powder pressing cylinder 52, has a cylinder space S3a and a plurality of holes (not shown). Wherein, the top of the powder pressing cylinder 52a is integrally formed and linked to the inner edge of the first gear 516a, so as to allow the powder pressing cylinder 52a rotate relative to the powder distributing module shell 51a.

The powder distributing telescopic assembly 53a is fixedly connected to the inner side of the top plate 5114a in the upper space S22a, penetrates the through hole 5121a of the partition plate 512a and extends to the lower space S21a. The powder distributing telescopic assembly 53a also has a second telescopic bar 531a which is extendable and retractable along the first direction D1a.

The powder distributing driving assembly 54a comprises a motor body 541a and a second gear 542a. The motor body 541a is fixed to the side plate 5112a of the shell stage body 511a directly and has a motor output shaft 5411a. The second gear 542a is a bevel gear. The second gear 542a is correspondingly engaged with the first gear 516a so as to have the motor body 541a transmittably linked to the powder pressing cylinder 52a.

Following above, it is noted that the first gear 516a of the present embodiment rotates centered at a first axis X1a, and the second gear 542a rotates centered at a second axis X2a, wherein the first axis X1a is parallel to the first direction D1a, and the second axis X2a is perpendicular to the first direction D1a.

The powdering needle plate 55a comprises a needle plate body 551a and a plurality of powdering needles 552a (only one is labelled). The needle plate body 551a is pivotally connected to the second telescopic bar 531a, and driven by the second telescopic bar 531a so as to movably penetrate the cylinder space S3a of the cylinder body 521a along the first direction D1a. The plurality of powdering needles 552a are extended from the needle plate body 551a along the first direction D1a toward a bottom of the powder pressing cylinder 52a and correspondingly penetrating the holes 52111 on the powder pressing cylinder 52a (not shown) respectively. In the present embodiment, when the second telescopic bar 531a of the powder distributing telescopic assembly 53a retracts to the extreme, the plurality of powdering needles 552a retract back to the powder pressing cylinder 52a respectively and align with the bottom surface of the powder pressing cylinder 52a to form a pressing plane (not labelled).

As mentioned above, in compared with the powdering needle plate 55 of the first embodiment, which is driven by the first driver 41 and moves together with the whole powder distributing module 5 along the first direction D1, and then is driven by the motor output shaft 5421 to rotate for doing the action of powder distribution, the powdering needle plate 55a is driven by the powder distributing telescopic assembly 53a to move along the first direction D1a, and then rotates together with the first gear 516a for doing the action of powder distribution.

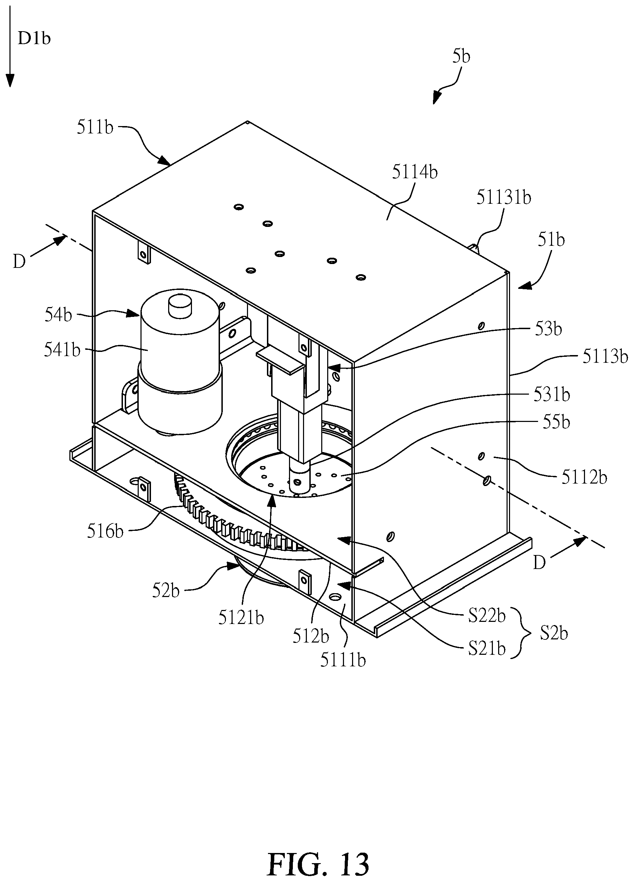

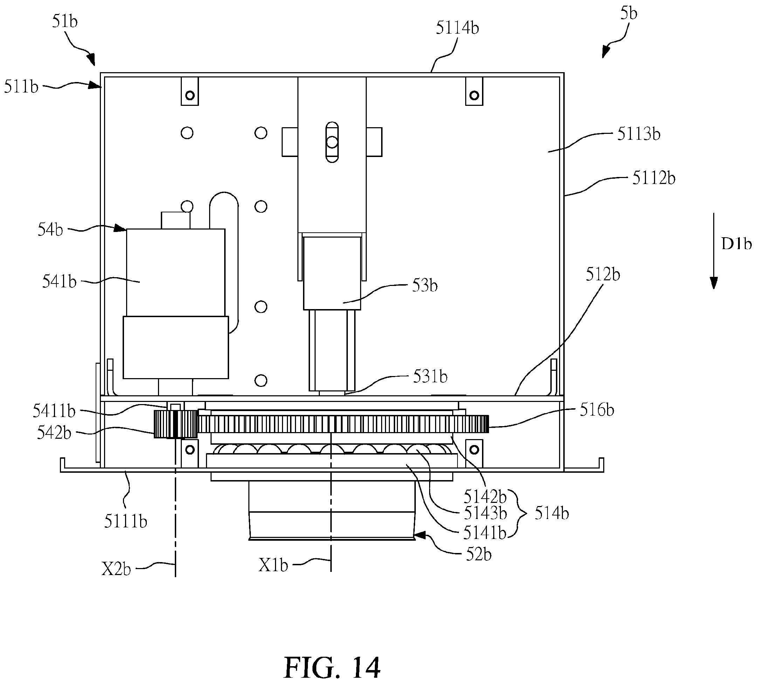

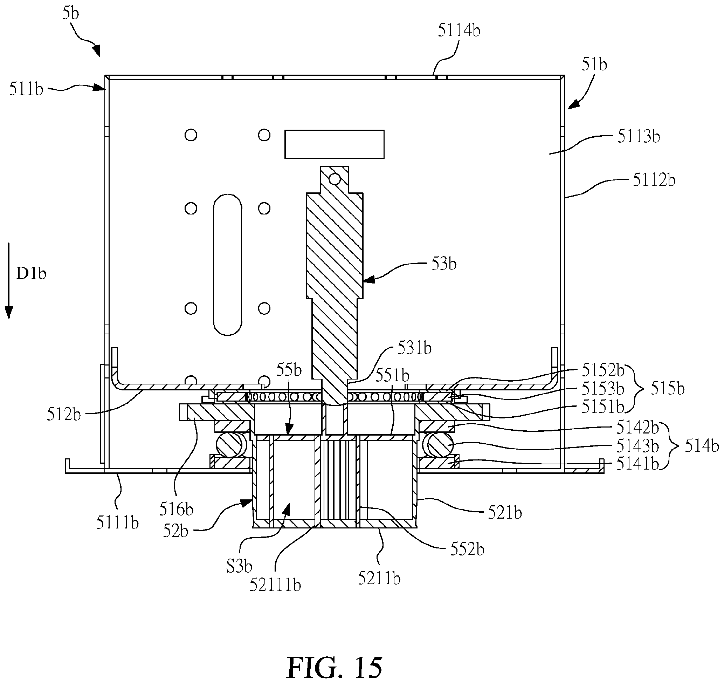

Please keep referring to Fig. 13 to Fig. 15, wherein Fig. 13 is a schematic perspective view of a powder distributing module provided in accordance with a third preferred embodiment of the present invention, Fig. 14 is a schematic planar view of a powder distributing module provided in accordance with a third preferred embodiment of the present invention, and Fig. 15 is a schematic cross-sectional view along D-D cross-section of a powder distributing module provided in accordance with a third preferred embodiment of the present invention.

As shown in Fig. 1 to Fig. 15, the present embodiment adapts a powder distributing module 5b to replace the afore-mentioned powder distributing module 5a. The powder distributing module 5b comprises a powder distributing module shell 51b, a powder pressing cylinder 52b, a powder distributing telescopic assembly 53b, powder distributing driving assembly 54b, and a powdering needle plate 55b.

The powder distributing module shell 51b comprises a shell stage body 511b, a partition plate 512b, a front guard plate (not shown, corresponding to the afore-mentioned front guard plate 513, and thus is skipped), a first bearing 514b, a second bearing 515b, and a first gear 516b. The shell stage body 511b has a base plate 5111b, two side plates 5112b (only one of them is labelled), a back plate 5113b, and a top plate 5114b. Because the shell stage body 511b and the partition plate 512b are similar to the shell stage body 511 and the partition plate 512 of the afore-mentioned first preferred embodiment respectively, and thus is not repeated here. In addition, with the linking structure 51131b of the back plate 5113b linked to the first driver 41, the powder distributing module shell 51b can be assembled in the afore-mentioned fixed bracket 2.

The first bearing 514b comprises a first bearing lower part 5141b, a first bearing upper part 5142b, and a plurality of first bearing rolling elements 5143b (only one is labelled). The first bearing lower part 5141b is fixed on the base plate 5111b, the first bearing upper part 5142b is correspondingly disposed on the first bearing lower part 5141b. The plurality of first bearing rolling elements 5143b are disposed between the first bearing lower part 5141b and the first bearing upper part 5142b so as to allow the first bearing lower part 5141b and the first bearing upper part 5142b rotate relatively.

The second bearing 515b comprises a second bearing lower part 5151b, a second bearing upper part 5152b, and a plurality of second bearing rolling elements 5153b (only one is labelled). The second bearing lower part S151b is spaced apart from the first bearing upper part 5142b, the second bearing upper part 5152b is disposed on the second bearing lower part S151b. The plurality of second bearing rolling elements 5153b are disposed between the second bearing lower part 5151b and the second bearing upper part 5152b so as to allow the second bearing lower part 5151b and the second bearing upper part 5152b rotate relatively.

The first gear 516b is disposed between the first bearing 514b and the second bearing 515b, and abuts the first bearing upper part 5142b and the second bearing lower part 5151b, so as to allow the first gear 516b to rotate relative to the shell stage body 511b.

The powder pressing cylinder 52b comprises a cylinder body 521b, the cylinder body 521b has a cylinder space S3a, and the cylinder body 521b also comprises a cylinder body bottom 5211b. The cylinder body bottom 5211b has a plurality of holes 52111b (only one is labelled). Wherein, the top of the cylinder body 521b is integrally formed and linked to the first gear 516b, so as to allow the powder pressing cylinder 52b rotate relative to the powder distributing module shell 51b.

The powder distributing telescopic assembly 53b is fixedly connected to the inner side of the top plate 5114b in the upper space S22b, and the powder distributing telescopic assembly 53b has a second telescopic bar 531b which is extendable and retractable along the first direction D1b.

The powder distributing driving assembly 54b comprises a motor body 541b and a second gear 542b. The motor body 541b is fixed in the upper space S22b and has a motor output shaft 5411b. The motor output shaft 5411b penetrates the partition plate 512b and extends to the lower space S21b. Wherein, the motor body 541b of the present embodiment can be an eccentric motor for example, and the motor output shaft can be an eccentric output shaft, such that size of the shell stage body 511b can be effectively reduced. In addition, in practice, the motor body 541b can be fixed to the shell stage body 511b or the partition plate 512b.

The second gear 542b is disposed in the lower space S21b and fixedly connected to the motor output shaft 5411b. The second gear 542b is also engaged with the first gear 516b so as to have the motor body 541b transmittably linked to the powder pressing cylinder 52b.

Following above, it is noted that the first gear 516b of the present embodiment rotates centered at a first axis X1b, and the second gear 542b rotates centered at a second axis X2b, wherein both the first axis X1b and the second axis X2b are parallel to the first direction D1b, and in the present embodiment, both the first gear 516b and the second gear 542b are spur gears.

The powdering needle plate 55b comprises a needle plate body 551b and a plurality of powdering needles 552b (only one is labelled). The needle plate body 551b is pivotally connected to the second telescopic bar 531b, and movably penetrates the cylinder space S3b of the cylinder body 521b along the first direction D1b. The plurality of powdering needles 552b protrude from the needle plate body 551b along the first direction D1b toward the cylinder body bottom 5211b and correspondingly penetrate the plurality of holes 52111b, respectively. In the present embodiment, when the second telescopic bar 531b of the powder distributing telescopic assembly 53b retracts to the extreme, the plurality of powdering needles 552b retract back to the cylinder body bottom 5211b respectively and align with the bottom surface of the cylinder body bottom 5211b to form a pressing plane (not labelled).

As mentioned above, the action principle of the powdering needle plate 55b is similar to the afore-mentioned powdering needle plate 55a, which is driven by the powder distributing telescopic assembly 53b to move along the first direction D1b first, and then rotates together with the first gear 516b for doing the action of powder distribution.

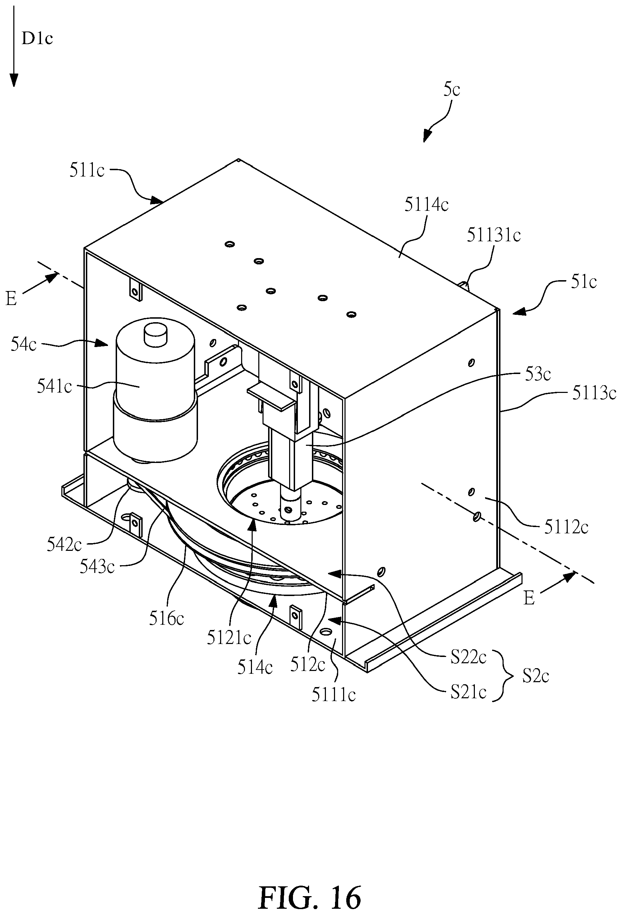

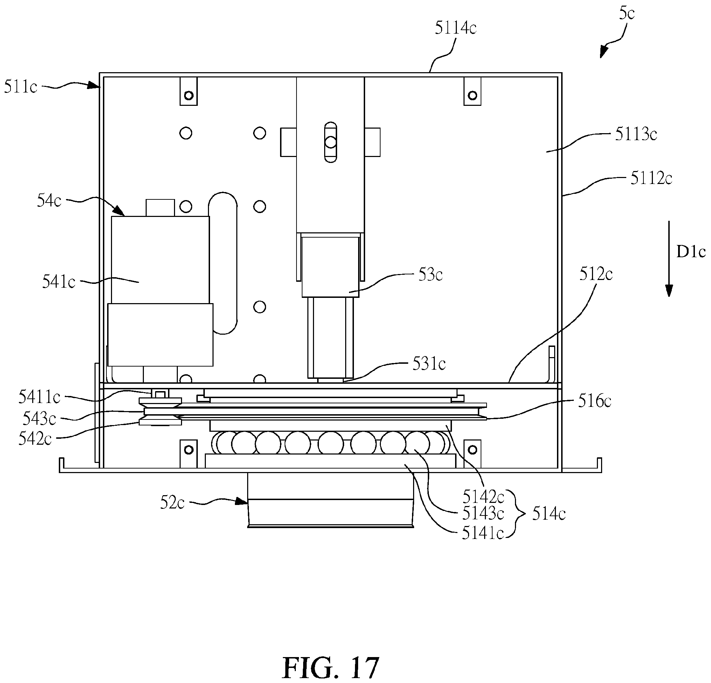

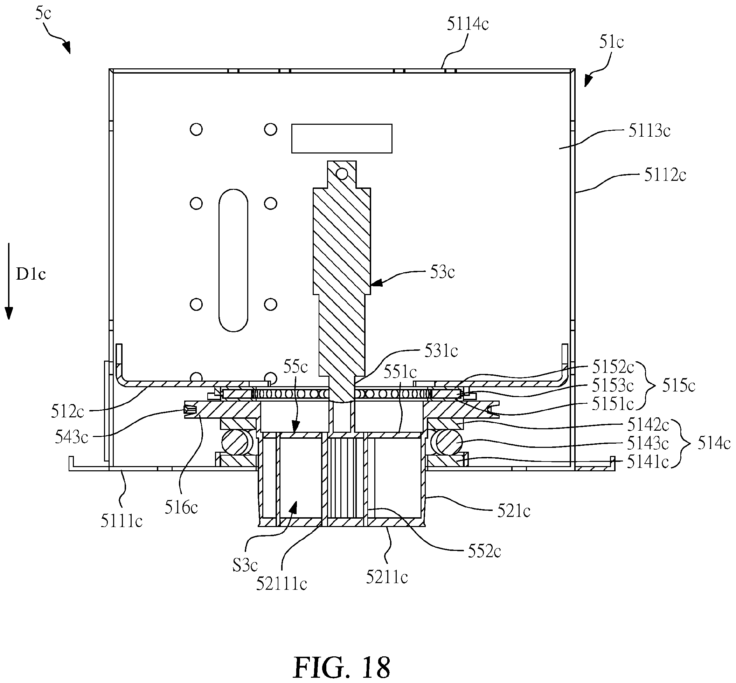

Please keep referring to Fig. 16 to Fig. 18, wherein Fig. 16 is a schematic perspective view of a powder distributing module provided in accordance with a fourth preferred embodiment of the present invention, Fig. 17 is a schematic planar view of a powder distributing module provided in accordance with a fourth preferred embodiment of the present invention; and Fig. 18 is a schematic cross-sectional view along E-E cross-section of a powder distributing module provided in accordance with a fourth preferred embodiment of the present invention.

As shown in Fig. 1 to Fig. 18, the present embodiment adapts a powder distributing module 5c to replace the afore-mentioned powder distributing module 5b. The powder distributing module 5c comprises a powder distributing module shell 51c, a powder pressing cylinder 52c, a powder distributing telescopic assembly 53c, powder distributing driving assembly 54c, and a powdering needle plate 55c.

The powder distributing module shell 51c comprises a shell stage body 511c, a partition plate 512c, a front guard plate (not shown, corresponding to the afore-mentioned front guard plate 513, and thus is skipped), a first bearing 514c, a second bearing 515c, and a first wheel 516c. The shell stage body 511c has a base plate 5111c, two side plates 5112c (only one of them is labelled), a back plate 5113c, and a top plate 5114c. Because the shell stage body 511c and the partition plate 512c are similar to the shell stage body 511 and the partition plate 512 of the afore-mentioned first preferred embodiment respectively, and thus is not repeated here. In addition, with the linking structure 51131c of the back plate 5113c linked to the first driver 41, the powder distributing module shell 51c can be assembled in the afore-mentioned fixed bracket 2.

The first bearing 514c comprises a first bearing lower part 5141c, a first bearing upper part 5142c, and a plurality of first bearing rolling elements 5143c (only one is labelled). The first bearing lower part 5141c is fixed on the base plate 5111c, the first bearing upper part 5142c is correspondingly disposed on the first bearing lower part 5141c. The plurality of first bearing rolling elements 5143c are disposed between the first bearing lower part 5141c and the first bearing upper part 5142c so as to allow the first bearing lower part 5141c and the first bearing upper part 5142c rotate relatively.

The second bearing 515c comprises a second bearing lower part 5151c, a second bearing upper part 5152c, and a plurality of second bearing rolling elements 5153c (only one is labelled). The second bearing lower part 5151c is spaced apart from the first bearing upper part 5142c, the second bearing upper part 5152c is disposed on the second bearing lower part 5151c. The plurality of second bearing rolling elements 5153c are disposed between the second bearing lower part 5151c and the second bearing upper part 5152c so as to allow the second bearing lower part 5151c and the second bearing upper part 5152c rotate relatively.

The first wheel 516c is disposed between the first bearing 514c and the second bearing 515c, and abuts the first bearing upper part 5142c and the second bearing lower part 5151c so as to allow the first wheel 516c rotate relative to the shell stage body 511c.

The powder pressing cylinder 52c comprises a cylinder body 521c, the cylinder body 521c has a cylinder space S3c, and the cylinder body 521c also has a cylinder body bottom 5211c. The cylinder body bottom 5211c has a plurality of holes 52111c (only one is labelled). In the present embodiment, the top of the cylinder body 521c is integrally formed and linked to the first wheel 516c, so as to allow the powder pressing cylinder 52c rotate relative to the powder distributing module shell 51c.

The powder distributing telescopic assembly 53c is fixedly connected to the inner side of the top plate 5114c in the upper space S22c of the mechanism space S2c, the powder distributing telescopic assembly 53c has a second telescopic bar 531c which is extendable and retractable along the first direction D1c, and the second telescopic bar 531 is further extended from the upper space S22c to the lower space S21c.

The powder distributing driving assembly 54c comprises a motor body 541c, a second wheel 542c, and a belt 543c. The motor body 541c is fixed in the upper space S22c of the mechanism space S2c and the motor body 541c has a motor output shaft 5411c. The second wheel 542c is fixedly connected to the motor output shaft 5411c, and the belt 543c is transmittably linked to the first wheel 516c and the second wheel 542c so as to have the motor body 541c transmittably linked to the powder pressing cylinder 52c.

The powdering needle plate 55c comprises a needle plate body 551c and a plurality of powdering needles 552c (only one is labelled). The needle plate body 551c is pivotally connected to the second telescopic bar 531c, and movably penetrates the cylinder space S3c of the cylinder body 521c along the first direction D1c. The plurality of powdering needles 552c protrude from the needle plate body 551c along the first direction D1c toward the cylinder body bottom 5211c and correspondingly penetrate the plurality of holes 52111c, respectively. In the present embodiment, when the second telescopic bar 531c of the powder distributing telescopic assembly 53c retracts to the extreme, the plurality of powdering needles 552c retract back to the cylinder body bottom 5211c respectively and align with the bottom surface of the cylinder body bottom 5211c to form a pressing plane (not labelled).

As mentioned above, the action principle of the powdering needle plates 55c is similar to the powdering needle plate 55b, which is driven by the powder distributing telescopic assembly 53c to move along the first direction D1c first, and then rotates together with the first wheel 516c for doing the action of powder distribution.

In conclusion, because the existing coffee powder distributing and tamping technology is executed using a powder spreader evenly distributing the coffee powder and then using a tamper or an automatic filling and compacting machine to tamp the distributed coffee powder. That is, the coffee powder distributing and tamping process requires two instruments executed in two segmented operations, which would be more cumbersome and time-consuming. In contrast, the present invention uses the powder distributing telescopic assembly and the powder distributing driving assembly to drive the powdering needle plate to distribute the coffee powder in the basket. Because the powder distributing telescopic assembly and the powder distributing driving assembly are disposed in the powder distributing module shell, and the powdering needles of the powdering needle plate penetrate the powder pressing cylinder, when the powder distributing stage completes and the powdering needles retract back to the bottom surface of the powder pressing cylinder to form the pressing plane, the tamping telescopic assembly can be used to drive the whole powder distributing module shell moving along the first direction to flatten and tamp the distributed coffee powder by using the pressing plane.

Following above, because the coffee powder distributing and tamping device is capable to execute the power distributing action and the tamping action to the coffee powder continuously through the power distributing telescopic assembly, the powder distributing driving assembly, and the tamping telescopic assembly when the basket is fixed under the powder pressing cylinder through the basket handler, Thus, the present invention does enhance the efficiency of making powder cakes.

It should be noted that the coffee powder distributing and tamping device not only can be separately used for executing coffee powder distributing and tamping actions, but also can be integrated in the automatic coffee machine to further brew coffee using the distributed and tamped powder cake.

The foregoing descriptions are merely preferred embodiments of this disclosure, and do not constitute any limitation on this disclosure. Any form of variation such as equivalent replacement or modification made to the technical means and technical content disclosed in this disclosure without departing from the scope of the technical means of this disclosure is the content of the technical means of this disclosure and still falls within the protection scope of this disclosure.

## Claims

1. A coffee powder distributing and tamping device, comprising:
a device shell, having a storage space and an operating opening communicated with the storage space;
a fixed bracket, disposed in the storage space and fixedly connected to the device shell;
a tamping telescopic assembly, fixedly disposed on the fixed bracket; and
a powder distributing module, comprising:
a powder distributing module shell, linked to the tamping telescopic assembly and driven by the tamping telescopic assembly so as to be movably disposed in the device shall along a first direction;
a powder pressing cylinder, rotatably disposed on the powder distributing module shell and protruded from the powder cylinder module shell;
a plurality of powder distributing telescopic assemblies, disposed in the powder distributing module shall and fixedly connected to the powder distributing module shell respectively;
a powder distributing driving assembly, fixedly connected to the powder distributing telescopic assemblies and driven by the powder distributing telescopic assemblies so as to be movably disposed in the powder distributing module shell along the first direction; and
a powdering needle plate, transmittably linked to the powder distributing driving assembly, for being driven by the powder distributing driving assembly so as to be rotatably disposed in the powder pressing cylinder, the powdering needle plate having a plurality of powdering needles, and the powdering needles penetrating the powder pressing cylinder respectively;
wherein, during a powder distributing stage, a basket is fixed in the storage space and aligned with the powder pressing cylinder, and the powdering needles of the powdering needle plate, which are driven by the powder distributing telescopic assemblies and the powder distributing driving assembly, extend into the basket and rotationally stir coffee powder in the basket, and retract back to the powder pressing cylinder after the coffee powder is stirred and uniformly distributed, so as to form a pressing plane at a bottom surface of the powder pressing cylinder; and during a powder tamping stage after the powder distributing stage, the powder distributing module, which is driven by the tamping telescopic assembly, moves along the first direction to flatten the coffee powder by using the pressing plane.

2. The coffee powder distributing and tamping device of claim 1, wherein the powder distributing module shell further comprises a shell stage body and a partition plate, the shell stage body has a mechanism space, the partition plate is disposed in the mechanism space, and the powder pressing cylinder is rotatably disposed between the shell stage body and the partition plate.

3. The coffee powder distributing and tamping device of claim 2, wherein the powder distributing module shell further comprises a first bearing and a second bearing, the first bearing and the second bearing are disposed between the shell stage body and the partition plate, and the powder pressing cylinder is disposed between the first bearing and the second bearing to have the powder pressing cylinder rotatably disposed on the powder distributing module shall.

4. The coffee powder distributing and tamping device of claim 1, further comprising a basket holder and an elastic clamping assembly, wherein the basket holder is fixedly disposed on the fixed bracket and exposed through the operating opening, the elastic clamping assembly is along the first direction retractably connected to the powder distributing module shell and is disposed between the backet holder and the powder distributing module shell for clamping a bracket handler extending between the basket holder and the powder distributing module shell to have the basket supported by the basket handler fixed in the storage space and aligned with the powder pressing cylinder, wherein the powder pressing cylinder further penetrates the elastic clamping assembly.

5. A coffee powder distributing and tamping device, comprising:
a device shell, having a storage space and an operating opening communicated with the storage space;
a fixed bracket, disposed in the storage space and fixedly connected to the device shell;
a tamping telescopic assembly, fixedly disposed on the fixed bracket; and
a powder distributing module, comprising:
a powder distributing module shell, linked to the tamping telescopic assembly and driven by the tamping telescopic assembly so as to be movably disposed in the device shall along a first direction;
a powder pressing cylinder, rotatably disposed on the powder distributing module shell and protruded from the powder cylinder module shell;
a powder distributing telescopic assemblies, disposed in the powder distributing module shall and fixedly connected to the powder distributing module shell;
a powder distributing driving assembly, fixedly connected to the powder distributing telescopic assemblies and driven by the powder distributing telescopic assemblies so as to be movably disposed in the powder distributing module shell along the first direction; and
a powdering needle plate, transmittably linked to the powder distributing driving assembly, for being driven by the powder distributing driving assembly so as to be rotatably disposed in the powder pressing cylinder, the powdering needle plate having a plurality of powdering needles, and the powdering needles penetrating the powder pressing cylinder respectively;
wherein, during a powder distributing stage, a basket is fixed in the storage space and aligned with the powder pressing cylinder, and the powdering needles of the powdering needle plate, which are driven by the powder distributing telescopic assembly and the powder distributing driving assembly, extend into the basket and rotationally stir coffee powder in the basket, and retract back to the powder pressing cylinder after the coffee powder is stirred and uniformly distributed, so as to form a pressing plane at a bottom surface of the powder pressing cylinder; and during a powder tamping stage after the powder distributing stage, the powder distributing module, which is driven by the tamping telescopic assembly, moves along the first direction to flatten the coffee powder by using the pressing plane.

6. The coffee powder distributing and tamping device of claim 5, wherein the powder distributing module shell further comprises a shell stage body and a partition plate, the shell stage body has a mechanism space, the partition plate is disposed in the mechanism space, and the powder pressing cylinder is rotatably disposed between the shell stage body and the partition plate.

7. The coffee powder distributing and tamping device of claim 6, wherein the powder distributing module shell further comprises a first bearing and a second bearing, the first bearing and the second bearing are disposed between the shell stage body and the partition plate, and the powder pressing cylinder is disposed between the first bearing and the second bearing to have the powder pressing cylinder rotatably disposed on the powder distributing module shall.

8. The coffee powder distributing and tamping device of claim 7, wherein the powder distributing module shell further comprises a first gear, the first gear is disposed between the first bearing and the second bearing, and the powder pressing cylinder is linked to the first gear, the powder distributing driving assembly further comprises a second gear, the second gear engages with the first gear so as to have the powder distributing driving assembly transmittably linked to the powder pressing cylinder.

9. The coffee powder distributing and tamping device of claim 8, wherein the first gear rotates centered at a first axis, the second gear rotates centered at a second axis, the first axis and the second axis are parallel to the first direction, and both the first gear and the second gear are spur gears.

10. The coffee powder distributing and tamping device of claim 8, wherein the first gear rotates centered at a first axis, the second gear rotates centered at a second axis, the first axis is parallel to the first direction, the second axis is perpendicular to the first direction, and both the first gear and the second gear are bevel gears.

11. The coffee powder distributing and tamping device of claim 7, wherein the powder distributing module shell further comprises a first wheel, the first wheel is disposed between the first bearing and the second bearing, and the powder pressing cylinder is linked to the first wheel, the powder distributing driving assembly further comprises a second wheel, the second wheel is transmittably linked to the first wheel to have the powder distributing driving assembly transmittably linked to the powder pressing cylinder.

12. The coffee powder distributing and tamping device of claim 5, further comprising a basket holder and an elastic clamping assembly, wherein the basket holder is fixedly disposed on the fixed bracket and exposed through the operating opening, the elastic clamping assembly is along the first direction retractably connected to the powder distributing module shell and is disposed between the backet holder and the powder distributing module shell for clamping a bracket handler extended between the basket holder and the powder distributing module shell to have the basket supported by the basket handler fixed in the storage space and aligned with the powder pressing cylinder, wherein the powder pressing cylinder further penetrates the elastic clamping assembly.

## Amended claims

### Amended claims in accordance with Rule 137(2) EPC.

1. A coffee powder distributing and tamping device (100), comprising:
a device shell (1), having a storage space (S1) and an operating opening (OP1) communicated with the storage space (S1);
a fixed bracket (2), disposed in the storage space (S1) and fixedly connected to the device shell (1);
a tamping telescopic assembly (4), fixedly disposed on the fixed bracket (2); and
a powder distributing module (5), comprising:
a powder distributing module shell (51), linked to the tamping telescopic assembly (4) and driven by the tamping telescopic assembly (4) so as to be movably disposed in the device shell (1) along a first direction (D1);
a powder pressing cylinder (52), rotatably disposed on the powder distributing module shell (51) and protruded from the powder distributing module shell (51);
a plurality of powder distributing telescopic assemblies (53), disposed in the powder distributing module shell (51) and fixedly connected to the powder distributing module shell (51) respectively;
a powder distributing driving assembly (54), fixedly connected to the powder distributing telescopic assemblies (53) and driven by the powder distributing telescopic assemblies (53) so as to be movably disposed in the powder distributing module shell (51) along the first direction (D1); and
a powdering needle plate (55), transmittably linked to the powder distributing driving assembly (54), for being driven by the powder distributing driving assembly (54) so as to be rotatably disposed in the powder pressing cylinder (52), the powdering needle plate (55) having a plurality of powdering needles (552), and the powdering needles (552) penetrating the powder pressing cylinder (52) respectively;
wherein, during a powder distributing stage, a basket (300) is fixed in the storage space (S1) and aligned with the powder pressing cylinder (52), and the powdering needles (552) of the powdering needle plate (55), which are driven by the powder distributing telescopic assemblies (53) and the powder distributing driving assembly (54), extend into the basket (300) and rotationally stir coffee powder (400) in the basket (300), and retract back to the powder pressing cylinder (52) after the coffee powder (400) is stirred and uniformly distributed, so as to form a pressing plane at a bottom surface of the powder pressing cylinder (52); and during a powder tamping stage after the powder distributing stage, the powder distributing module (5), which is driven by the tamping telescopic assembly (4), moves along the first direction (D1) to flatten the coffee powder (400) by using the pressing plane.

2. The coffee powder distributing and tamping device (100) of claim 1, wherein the powder distributing module shell (51) further comprises a shell stage body (511) and a partition plate (512), the shell stage body (511) has a mechanism space (S2), the partition plate (512) is disposed in the mechanism space (S2), and the powder pressing cylinder (52) is rotatably disposed between the shell stage body (511) and the partition plate (512).

3. The coffee powder distributing and tamping device (100) of claim 2, wherein the powder distributing module shell (51) further comprises a first bearing (514) and a second bearing (515), the first bearing (514) and the second bearing (515) are disposed between the shell stage body (511) and the partition plate (512), and the powder pressing cylinder (52) is disposed between the first bearing (514) and the second bearing (515) to have the powder pressing cylinder (52) rotatably disposed on the powder distributing module shell (51).

4. The coffee powder distributing and tamping device (100) of claim 1, further comprising a basket holder (3) and an elastic clamping assembly (6), wherein the basket holder (3) is fixedly disposed on the fixed bracket (2) and exposed through the operating opening (OP1), the elastic clamping assembly (6) is along the first direction (D1) retractably connected to the powder distributing module shell (51) and is disposed between the basket holder (3) and the powder distributing module shell (51) for clamping a basket handler (200) extending between the basket holder (3) and the powder distributing module shell (51) to have the basket (300) supported by the basket handler (200) fixed in the storage space (S1) and aligned with the powder pressing cylinder (52), wherein the powder pressing cylinder (52) further penetrates the elastic clamping assembly (6).
